Europäisches Patentamt

European Patent Office

Office européen des brevets

(11) Publication number: **0 093 098 A2**

(12) **EUROPEAN PATENT APPLICATION**

(21) Application number: 83850100.5

(22) Date of filing: 15.04.83

(51) Int. Cl.³: **B 62 B 7/08**

(30) Priority: 28.04.82 SE 8202657

(43) Date of publication of application:
02.11.83 Bulletin 33.44

(84) Designated Contracting States:
DE FR GB IT NL

(71) Applicant: ALVEMA REHAB AB
Agårdsvägen 23
S-342 00 Alvesta(SE)

(72) Inventor: Alldén, Per-Olof
Helgehusvägen 4
S-352 50 Växjö(SE)

(74) Representative: Carminger, Lars
CARMINGER & UUSITALO PATENTBYRA AB Box 3554
S-103 69 Stockholm(SE)

(54) Collapsible stroller.

(57) The invention relates to a collapsible wheelchair or carriage of the stroller type, particularly for handicapped children. The carriage has a rectangular, rigid under-frame, formed by two side members (1) with wheeled axles (2) joining said members, which also support a superstructure (5, 7, 9). The superstructure is collapsible from an erected position of use to a folded position adjacent the underframe, and carries the carriage seat (15), which includes a seat portion (15a) and a back portion (15b) and preferably side pieces as well. The superstructure is self-locking in an erected state, such that it cannot be collapsed under the action of the weight of a person sitting in the seat. The superstructure is also implemented to form armrests or side supports for the seat.

EP 0 093 098 A2

Collapsible stroller

The present invention relates to a collapsible wheeled chair or carriage, particularly for children and of the so-called stroller type. The carriage in accordance with the invention has been developed primarily for handicapped children but can naturally also be used for those without handicap, the construction of the carriage being also utilizable in principle for adult wheelchairs.

A basic problem in the implementation of collapsible stroller-type carriages is to provide a sufficiently stable construction, which should also be self-locking in its erected state, so that the carriage is not unintentionally collapsed by the action of the weight of the person sitting in the carriage, if some locking or latching member should be out of function. Such unintentional collapsing of the carriage can lead to very serious injuries to the person using it. The construction should also be such that it is simple and cheep to manufacture. The type of structures used so far for collapsible strollers or wheelchairs seldom meet these requirements in a satisfactory manner.

The object of the present invention is therefore to provide a collapsible stroller-type carriage which fulfils the requirements mentioned above in a better manner than previously known structures. The characterizing features of the carriage in accordance with the invention are apparent from the appended claims.

The invention will now be described in detail in the following in conjunction with the accompanying drawing, on which a wheelchair or stroller implemented in accordance with the invention is schematically illustrated as an example, and where

Figure 1 is a perspective side view of the carriage in errected state, with the seat thereof only schematically illustrated with the aid of chain-dotted lines;

Figure 2 is a perspective view of the carriage seen from behind and with the seat removed for the sake of

0093098

clarity; and

Figure 3 is a perspective side view of the carriage in a collapsed state, similarly with the seat removed for the sake of clarity.

The stroller carriage or wheelchair in accordance with the invention and illustrated as an example has a rectangular underframe formed by two side members 1 and two axles 2 carrying wheels 3. The axles 2 are united with the side members 1 with the aid of spring means 4, allowing the axles 2 a spring motion in the vertical direction relative the side members 1, but which are so formed that the members 1 together with the axles 2 form a rectangular frame which is generally rigid in the plane of the frame.

The collapsible superstructure of the carriage includes two identical sets of articulatedly assembled struts, one on either side of the carriage. There is thus on either side of the carriage a first, substantially S-shaped strut generally denoted by 5 with two generally mutually parallel end portions 5a and 5b with an intermediate portion 5c uniting said portions, the latter forming obtuse angles with both end portions 5a and 5b in the illustrated embodiment. The lower end of the first strut 5 is pivotably attached to the forward end of the associated side member 1 of the underframe about a horizontal pivoting shaft 6. The strut assembly further includes, on either side of the carriage, a second straight strut 7, pivotably attached at its lower end to the rear part of the side member 1 about a pivoting shaft 8, and has its upper end articulatedly connected to one end of a third strut 9 about a horizontal pivoting shaft 10. This third strut 9 is in turn pivotably connected to the first strut 5 about a horizontal pivoting shaft 11 situated at, or in the vicinity of, the angle between the end portion 5b and intermediate section 5c of the strut 5. The strut 9 is extended in an upward direction and its upper end joined to the corresponding strut 9 of the other side of the carriage with the aid of the carriage handle 12. The other struts 5 and 7 are also joined to the corresponding struts on the other side of the carriage with the aid of

cross members 13 and 14, respectively.

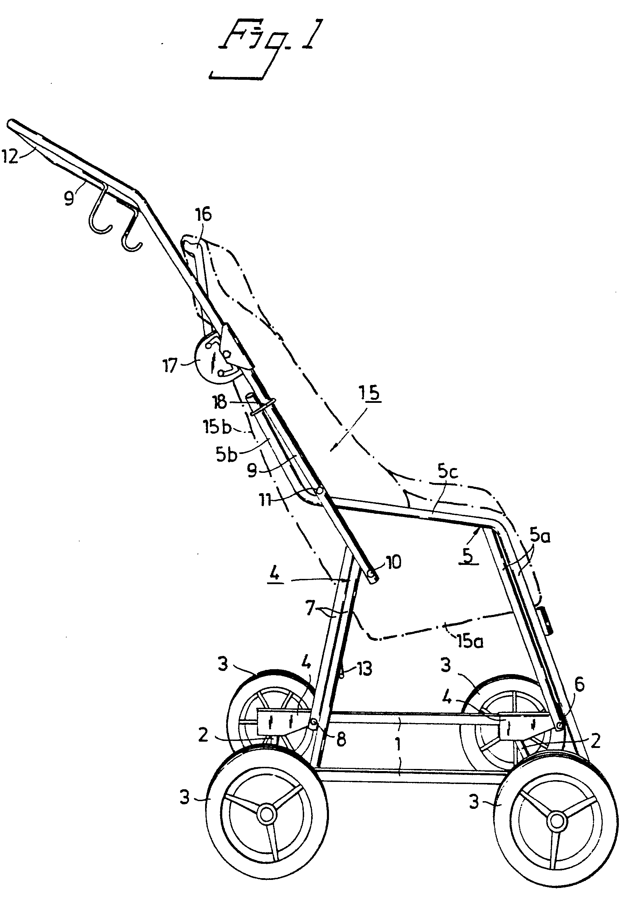

The seat 15 of the carriage, only schematically illustrated in Figure 1, can be manufactured to advantage from textile or plastic fabric, or similar material with possible necessary stiffening in the seat portion 15a and the back portion 15b. The seat is, in any case, implemented such that the seat portion 15a and back portion 15b are articulatedly connected to each other along the back edge of the seat portion 15a and the bottom edge of the back portion 15b. The seat is attached to struts 5 and 9 such that the seat portion 15a is carried by the strut 5, while the back portion 15b is carried by the strut 9. For this purpose there is a yoke 16, carrying the upper edge of the back portion 15, attached between the struts 9 on either side of the carriage. The yoke 16 is attached to the struts 9 with the aid of special attachments 17 enabling adjustment of the yoke 16 in different positions for altering the inclination of the back portion 15. It will be understood that the yoke 16 could also be replaced by a fixed cross member between the struts 9 on either side of the carriage.

In the erected state of the carriage illustrated in Figure 1, the middle portion 5c of the strut 5 is substantially horizontal and forms an armrest or side support for the seat 15. To advantage, the seat 15 is implemented with whole side pieces, downwardly united with the seat portion 15a along its side edges, and rearwardly united with the back portion 15b along its side edges, while upwardly and forwardly being attached to the intermediate portions 5c and lower portions 5a, respectively, of the struts 5.

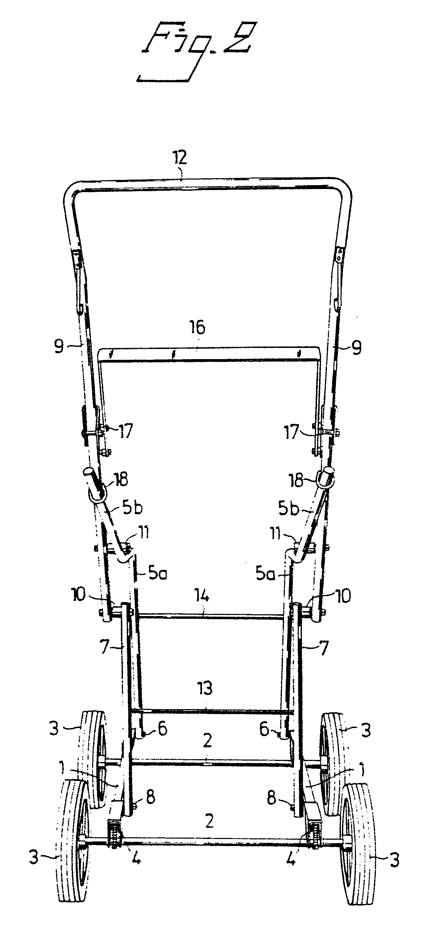

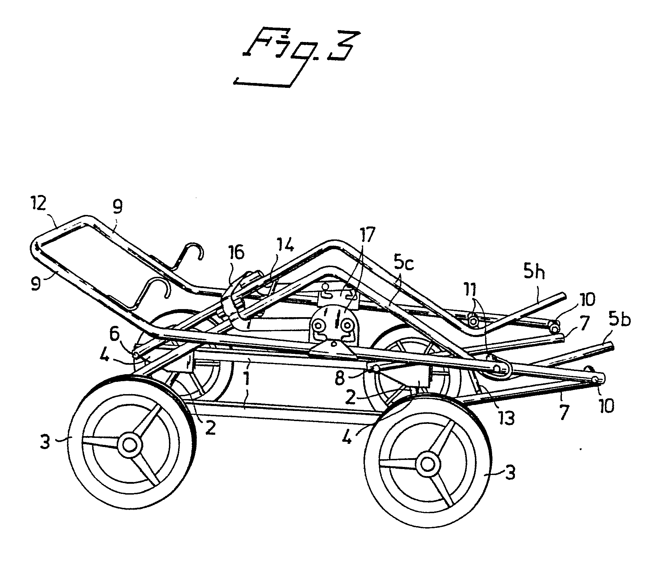

In the erected state of the carriage, the connection point 10 between the struts 7 and 9 is situated in front of the connection point 11 between struts 9 and 5 as well as the attachment point 8 of the strut 7 to the side member 1 of the under-frame. Struts 7 and 9 thus form a toggle which must be straightened out and collapsed in the opposite direction for the superstructure of the carriage to be collapsed to the state illustrated in Figure 3. As will be most clearly seen from Figure 2, the upper end portions 5b

of the strut 5 are obliquely directed to cross and lie behind the strut 9. It will be understood that the superstructure of the carriage will accordingly be self-locking in its erected state, such that it cannot be collapsed under the action of the weight of a person sitting in the seat 15. In order that the superstructure shall be kept locked in its erected state, even against collapse in the intended direction by moving the handle 12 forward, i.e. to the right in Figure 1, there is a metal ring 18 on either strut 9, and this ring can be pushed over the end 5b of the strut 5 so as to encircle the latter resulting in that the strut 9 and strut 5 are locked to each other.

It will be understood that a carriage implemented in accordance with the invention can be supplemented by further details not illustrated in detail on the drawing, e.g. a footrest attached to the lower portions 5a of the strut 5, a sunshade top and the like.

## C l a i m s

1.    Collapsible wheelchair or carriage such as a stroller, including a rigid, rectangular under-frame (1, 2) provided with wheels, a collapsible superstructure carried by said under-frame, and a seat (15) fitted to the superstructure and including a seat portion (15a) and a back portion (15b) articulatedly attached thereto, c h a r a c t e r i z e d in that on either side of the carriage said superstructure includes a first strut (5) with one end pivotably attached to a horizontal shaft (6) at the forward end of the under-frame side member (1), a second strut (7) with one end pivotably attached to a horizontal shaft (8) at the rear portion of the under-frame side member (1), the other end of the strut (7) being pivotably connected to a horizontal shaft (10) together with one end of a third strut (9), which is pivotably connected at some distance from its said end to a horizontal shaft (11) together with said first strut (5) at some distance from the other end of the first strut (5) to extend upward from said connection point (11) with the first strut (5), there being a locking means (18) adapted for detachable mutual locking of said first and said third struts (5, 9) at a point above said common connection point (11) for locking the superstructure in an erected state, in which the connection point (10) between said second and said third struts (7, 9) is situated in front of the connection point (11) between the first strut (5) and the third strut (9) as well as being in front of the attachment point (8) of the second strut (7) to the side member (1) of the under-frame, and in that the seat (15) is attached to said first and said third struts (5, 9) with the seat portion (15a) carried by the first strut (5) and the back portion (15b) carried by the third strut (9) on either side of the connection point (11) between said first and said third struts (5, 9).

2.    Carriage as claimed in claim 1, c h a r a c t e r i z e d in that the portion (5b) of the first strut (5), situated above the connection point (11) between said first and said third struts (5, 9), is situated behind  and crossing the

portion of the third strut (9) situated on the same side of said connection point (11) in the erected state of the superstructure such that the superstructure is prevented from collapsing under the action of the weight of a person sitting in the seat (15).

3. Carriage as claimed in claim 1 or 2, c h a r a c t e r-
i z e d in that the first strut (5) is substantially S-
shaped with two end portions (5a, 5b) substantially mutually parallel and an intermediate portion (5c) therebetween, the connection point (11) between the first strut (5) and the third strut (9) being situated substantially at the angle between the intermediate portion (5c) of the first strut (5) and its upper end portion (5b).

4. Carriage as claimed in claim 3, c h a r a c t e r -
i z e d in that the intermediate portion (5c) of the first strut (5) is substantially horizontal in the erected state of the superstructure, and forms an armrest or side support for the seat (15).

5. Carriage as claimed in any of the claims 1 - 4,
c h a r a c t e r i z e d in that said third strut (9) is situated laterally outside of the first strut (5) as well as the second strut (7) at its connection points (11, 10) to said struts.

6. Carriage as claimed in any of claims 1 - 5, c h a r -
a c t e r i z e d in that the mutually corresponding struts on either side of the carriage are rigidly connected to each other with the aid of cross members (12, 13, 14).

7. Carriage as claimed in any of claims 1 - 6, c h a r -
a c t e r i z e d in that said third strut (9) extends upwards above the back portion of the seat (15) and at its upper end is united with the upper end of the corresponding third strut on the opposite side of the carriage with the aid of a transverse handle (12) for manoeuvering the carriage.

8. Carriage as claimed in any of claims 1 - 7, c h a r -
a c t e r i z e d in that said locking means comprises a ring (18) surrounding the third strut (9) and displaceable along it, such that said ring can be slid over the contiguous end (5b) of the first strut (5) for surrounding it and thereby rigidly locking both struts to each other.

*Fig. 1*

Fig. 2

Fig.3